# EUROPÄISCHE PATENTSCHRIFT

(11) **EP 1 469 029 B1**
(45) Veröffentlichungstag und Bekanntmachung des Hinweises auf die Patenterteilung: **29.08.2007**
(21) Anmeldenummer: 04008288.5
(22) Anmeldetag: 06.04.2004
(51) Int. Cl.: C08G 77/445, C08G 77/388, C08G 18/61, C08G 18/10, C08G 18/67, C08G 63/695

(54) **Neuartige Polyestersiloxanacrylate, deren Verwendung als Additive in strahlenhärtbaren Beschichtungen und Druckfarben und Verfahren zu deren Herstellung**
Novel polyestersiloxaneacrylates, their use as additives in radiation-curable coatings and printing inks and process for their production
Nouveaux polyestersiloxanacrylates, leur utilisation comme additif pour revêtements durcissables par irradiation et encres d'impression et procédé pour leur préparation

(30) Priorität: 19.04.2003 DE 10318017
(43) Veröffentlichungstag der Anmeldung: 20.10.2004
(73) Patentinhaber: Goldschmidt GmbH, 45127 Essen (DE)
(72) Erfinder: Esselborn, Eberhard, 45147 Essen (DE); Oestreich, Sascha, Dr., 45279 Essen (DE); Schröter, Cornelia, 47800 Krefeld (DE)

(56) Entgegenhaltungen:
- EP-A- 0 937 998
- WEN-YEN CHIANG, WEY-JYE SHU: "Preparation and properties of UV-curable poly(dimethylsiloxane) urethane acrylate" ANGEW. MAKROMOL. CHEM., Bd. 160, Nr. 1, 1988, Seiten 41-66, XP002286844

## Beschreibung

Gegenstand der Erfindung sind neuartige Polyestersiloxanacrylate, deren Verwendung als Additive in strahlenhärtbaren Beschichtungen und Druckfarben und Verfahren zu deren Herstellung.

Die neuartigen Polyestersiloxanacrylate weisen hervorragende Eigenschaften als Additive in strahlenhärtenden Beschichtungen, Druckfarben und/oder Drucklacken auf. Die neuartigen Polyestersiloxanacrylate sind mit flüssigen Beschichtungen, Druckfarben und/oder Drucklacken hochverträglich, sie besitzen polymerisierbare Gruppen, so dass das Risiko der Migration von Additivbestandteilen minimiert wird und sie fördern den Verlauf und die Netzeigenschaften der noch flüssigen Beschichtungen, Druckfarben und/oder Drucklacke. Die gehärteten Beschichtungen, Druckfarben und/oder Drucklacke weisen eine verbesserte Beständigkeit gegenüber Verschmutzung durch Filzschreibern ("marker resistance") auf, ohne die Gleiteigenschaften der ausgehärteten Beschichtung unbefriedigend zu machen.

Die Strahlenhärtung durch UV-Licht oder Elektronenstrahlen ist ein schneller, effizienter und umweltschonender Weg, um polymerisierbare Monomere oder Oligomere zu härten. Keine Emissionen, geringe Investitionskosten und niedriger Energiebedarf durch kurze Trockenanlagen, hohe Produktionszahlen dank schneller Härtung und in vielen Fällen eine bessere Qualität der Beschichtung, vor allem hinsichtlich Glanz und Abriebfestigkeit, sind Gründe dafür, dass auf dem Gebiet der Industrielacke die Strahlenhärtung die expansivste Applikationsform darstellt.

Strahlenhärtende Beschichtungen, Druckfarben und/oder Drucklacke sind bekannt und beispielsweise in "UV & EB Curing Formulations for Printing Inks, Coatings & Paints" (R. Holman, P. Oldring, London 1988) beschrieben.

Es besteht ein wachsender Bedarf an Additiven für Beschichtungen und Drucklacke, die die Beständigkeit der Beschichtung gegenüber Verschmutzungen aller Art erhöhen. Insbesondere Verschmutzungen durch Filzschreiber sind unerwünscht ("marker resistance", "Antigraffiti-Effekt"). Die Schäden, die durch Verunreinigungen mit Filzschreibern an Möbeln, Fußböden, Wänden und anderen Oberflächen entstehen sind immens.

Um die sog. "marker resistance" von strahlenhärtbaren Beschichtungen und Drucklacken zu erhöhen, werden heute üblicherweise Fluorverbindungen und/oder Siliconpolymere eingesetzt (EP-A-0 493 172, WO-A-98/03574).

Nachteil dieser Fluor- und/oder Siliconverbindungen ist jedoch, dass sie in größeren Mengen eingesetzt werden müssen, um einen hinreichenden Schutzeffekt zu erzielen (Comonomere, Copolymere).

Da sie oft nicht während des Härtungsprozesses mit dem Bindemittel reagieren, können die Additive aus der gehärteten Beschichtung und/oder dem Drucklack heraus migrieren und sich als störender Film an der Oberfläche bemerkbar machen.

Die Fluor- und/oder Siliconverbindungen sind oft stark unverträglich mit der Beschichtung und/oder dem Drucklack, so dass Trübungen und Oberflächenstörungen (Krater, Orangenhaut, Dellen) im Lack entstehen können.

Weiterhin verringern solche Additive deutlich den Gleitwert der Beschichtung, so dass rutschige Oberflächen entstehen. Insbesondere im Bereich der Fußbodenlackierung (Parkett, Linoleum, PVC) ist ein solcher Effekt unerwünscht, da ein sicheres Betreten der Fußbodenbeschichtung gewährleistet sein muß. Ein gewisser Gleitwert der Beschichtung darf daher nicht unterschritten werden.

Es besteht also ein wachsender Bedarf an Additiven für strahlenhärtbare Beschichtungen und/oder Drucklacke, die strahlenhärtbare Gruppen aufweisen, hochverträglich sind, die die sog. "marker resistance" von Beschichtungen und/oder Drucklacken verbessern und die Gleiteigenschaften der Beschichtung nicht unbefriedigend machen.

Es war somit die Aufgabe der vorliegenden Erfindung Additive bereitzustellen, die strahlenhärtbare Gruppen aufweisen, hochverträglich sind, die die sog. "marker resistance" von Beschichtungen und/oder Drucklacken verbessern und die Gleiteigenschaften der Beschichtung nicht unbefriedigend machen.

Umsetzungsprodukte von organisch modifizierten Polysiloxanen mit Isocyanaten und Acrylaten sind bekannt und in der Literatur beschrieben. Zum Beispiel beschreibt WO-A-00/12588 u.a. die Verwendung solcher Polymere in der Haarkosmetik. EP-A-0 937 998 beschreibt die Verwendung von Polysiloxanen, die über eine Urethangruppe mit polymerisierbaren Gruppen verknüpft sind, in Kontaktlinsenmaterialien.

Die Eigenschaften von reinen, UV-gehärteten Polydimethylsiloxan-Harnstoff-Acrylaten werden von X. Yu et al, Journal of Applied Polymer Science, Vol. 30, 2115-2135 (1985) beschrieben.

In der genannten Literatur wird die Verwendung von Umsetzungsprodukten von organisch modifizierten Polysiloxanen mit Isocyanaten und Acrylaten als Additive in strahlenhärtenden Beschichtungen, Druckfarben und/oder Drucklacken nicht beschrieben. Weiterhin werden auch Umsetzungsprodukte aus organisch modifizierten Polysiloxanen mit Isocyanaten und Polyesteracrylaten zu Polyestersiloxanacrylaten nicht erwähnt.

Überraschenderweise wurde nun gefunden, dass vorgenannte Aufgabe gelöst wird durch neuartige Polyestersiloxanacrylate, erhältlich durch die Umsetzung von einem oder mehreren organisch modifizierten Polysiloxanen mit einem oder mehreren Polyisocyanaten mit jeweils wenigstens zwei Isocyanatgruppen und einem oder mehreren Polyesteracrylaten oder Polyestermethacrylaten.

Ein Gegenstand der Erfindung sind daher Polyestersiloxanacrylate, erhältlich durch die Umsetzung von
I.) einem oder mehreren organisch modifizierten Polysiloxanen der allgemeinen Formel (I) 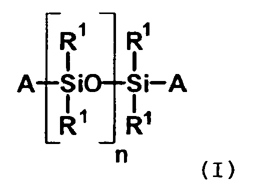 wobei die Reste
   - R¹: im Molekül gleich oder verschieden sind und Alkylreste mit 1 bis 4 Kohlenstoffatomen bedeuten,
   - A: gleich oder verschieden sind und
   -R²-X bedeuten, wobei
   R² ein Rest der allgemeinen Formel (Ia) 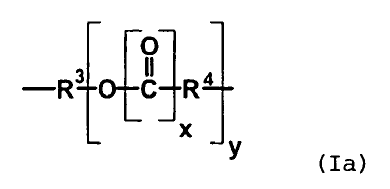 ist,
   R³ ein zweiwertiger, gegebenenfalls substituierter Alkyl- oder Alkenylrest mit 2 bis 11 Kohlenstoffatomen ist,
   R⁴ untereinander gleich oder verschieden sind und zweiwertige, gegebenenfalls substituierte Alkyl- oder Aralkylreste sind,
   x unabhängig voneinander einen Wert von 0 oder 1,
   y unabhängig voneinander einen Wert von 0 bis 100 hat und
   - X: eine mit Isocyanaten reaktive Gruppe ist und
II.) einem oder mehreren Polyisocyanaten mit jeweils wenigstens zwei Isocyanatgruppen und
III.) einem oder mehreren Polyesteracrylaten oder Polyestermethacrylaten der allgemeinen Formel (II) 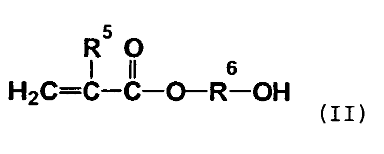 worin
   - R⁵: ein Wasserstoffatom oder eine Methylgruppe bedeutet und
   - R⁶: ein Rest der allgemeinen Formel (IIa) 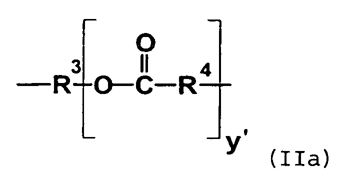 ist, wobei
   R³ und R⁴ die oben angegebene Bedeutung haben und
   y' einen Wert von 1 bis 50 hat,
gegebenenfalls in Gegenwart von Inhibitoren, Katalysatoren und gegebenenfalls weiteren mit Isocyanatgruppen reaktiven Verbindungen.

Ein weiterer Gegenstand der Erfindung ist ein Verfahren zur Herstellung der neuartigen Polyestersiloxanacrylate, wobei zunächst in erster Stufe (S₁)
a) ein oder mehrere organisch modifizierte Polysiloxane der allgemeinen Formel (I) 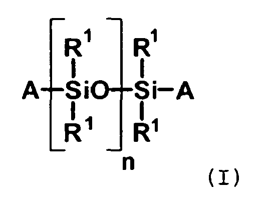 worin die Reste
   - A und R¹: die oben angegebene Bedeutung haben mit
b) einem oder mehreren Polyisocyanaten mit jeweils wenigstens zwei Isocyanatgruppen, gegebenenfalls in Gegenwart von Inhibitoren und Katalysatoren zu einem Isocyanatgruppen enthaltenden Prepolymer umgesetzt werden und anschließend in zweiter Stufe (S₂) einem oder mehreren Polyesteracrylaten oder Polyestermethacrylaten der allgemeinen Formel (II) 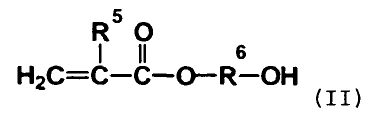 worin die Reste
   - R⁵ und R⁶: die oben angegebene Bedeutung haben und gegebenenfalls in einer weiteren Stufe (S₃) mit vorzugsweise monofunktionellen mit Isocyanaten reaktiven Gruppen aufweisenden Verbindungen nach an sich bekannten Verfahren umgesetzt werden.

Ein weiterer Gegenstand der Erfindung sind Polyestersiloxanacrylate, erhältlich durch Umsetzung von einem oder mehreren organisch modifizierten Polysiloxanen der allgemeinen Formel (I) mit einem oder mehreren Polyisocyanaten mit jeweils wenigstens zwei Isocyanatgruppen im Molverhältnis von 1 : 1,60 bis 1 : 1,95 und im wesentlichen äquivalenten Mengen (bezogen auf OH-Gruppen der Verbindungen der allgemeinen Formel (II) und Isocyanatgruppen des Prepolymeren aus Verbindungen der allgemeinen Formel (I) und Isocyanaten) von einem oder mehreren Polyesteracrylaten oder Polyestermethacrylaten der allgemeinen Formel (II) gegebenenfalls in Gegenwart von Inhibitoren, Katalysatoren und gegebenenfalls weiteren mit Isocyanatgruppen reaktiven Verbindungen.

Beispiele für den Rest R¹ sind Alkylreste mit 1 bis 4 Kohlenstoffatomen, wie Methyl-, Ethyl-, Propyl- und/oder Butylreste. Besonders bevorzugt sind Methylreste.

Beispiele für den Rest R³ sind zweiwertige, gegebenenfalls substituierte Alkyl- oder Alkenylreste mit 2 bis 11 Kohlenstoffatomen, wie -CH₂CH₂-, -CH₂CH (CH₃)-, -CH₂CH₂CH₂-, -(CH₂)₆-, -(CH₂)₈- und -CH₂CH₂CH (CH₃)-.

Beispiele für den Rest R⁴ sind zweiwertige, gegebenenfalls substituierte Alkyl- oder Aralkylreste mit 2 bis 11 Kohlenstoffatomen, wie -CH₂CH₂-, -CH₂CH (CH₃)-, -CH₂CH₂CH₂-, -(CH₂)₅-, -(CH₂)₆-, -(CH₂)₈-, -CH₂CH₂CH(CH₃)-, -CH₂CH(CH₂CH₃)- und 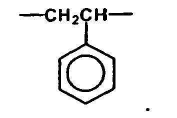 Beispiele für X sind Isocyanat-reaktive Gruppen, wie zum Beispiel Hydroxyl-, primäre Amino- und sekundäre Aminogruppen.

Beispiele für organisch modifizierte Polysiloxane der allgemeinen Formel (I) sind α,ω-hydroxyfunktionelle Polysiloxane, α,ω-aminofunktionelle Polysiloxane, α,ω-polyetherfunktionelle Polysiloxane und α,ω-polyesterfunktionelle Polysiloxane, wie sie zum Beispiel unter den Handelsnamen Tegomer® und Tegopren® von der Goldschmidt AG erhältlich sind.

Polyisocyanate im Sinne der vorliegenden Erfindung besitzen wenigstens zwei Isocyanatgruppen pro Molekül. Beispiele für Polyisocyanate sind insbesondere Diisocyanate und Triisocyanate. Geeignete Diisocyanate umfassen beispielsweise Toluylendiisocyanat (TDI), Hexamethylendiisocyanat (HMDI) , Isophorondiisocyanat (IPDI), Diphenylmethandiisocyanat (MDI) und Tetramethylxyloldiisocyanat (TMXDI). Ferner stehen Oligomere einiger dieser Produkte, zum Beispiel aus HMDI (Trimer) und IPDI (Trimer) zur Verfügung. Solche Polyisocyanate sind zum Beispiel unter den Handelsnamen Desmodur® N 3300 von der Bayer AG und Vestanat® T1890/100 von der Degussa AG erhältlich.

Beispiele für Polyesteracrylate oder Polyestermethacrylate der allgemeinen Formel (II) sind Verbindungen, wie sie von der Firma Daicel Chemical Industries unter den Handelsnamen Placcel® FA bzw. Placcel® FM erhältlich sind.

Inhibitoren im Sinne der vorliegenden Erfindung umfassen insbesondere Stabilisatoren für (Meth)acrylsäure oder (Meth)acrylsäureester. Geeignete Stabilisatoren sind beispielsweise Hydrochinonmonomethylether, wahlweise auch Hydrochinon und/oder Phenothiazin, die in Mengen eingesetzt werden können, die für die Stabilisierung von (Meth) acrylsäure oder (Meth)acrylsäureester üblich sind.

Katalysatoren im Sinne der vorliegenden Erfindung umfassen insbesondere Metallverbindungen, die die Reaktion der Isocyanatgruppen beschleunigen. Geeignete Katalysatoren sind zum Beispiel unter dem Handelsnamen Kosmos® von der Goldschmidt AG erhältlich.

In einer bevorzugten Ausführungsform der vorliegenden Erfindung sind die neuartigen Polyestersiloxanacrylate dadurch gekennzeichnet, dass
- n: einen Wert von 5 bis 100, insbesondere 10 bis 50,
- x: einen Wert von 0 oder 1,
- y: einen Wert von 0 bis 20, insbesondere 0 bis 10,
- y': einen Wert von 1 bis 20, insbesondere 2 bis 10 hat.

Die erfindungsgemäßen neuartigen Polyestersiloxanacrylate können vorteilhaft in strahlenhärtenden Beschichtungen, Druckfarben und/oder Drucklacken in einer Konzentration von 0,01 bis 10,0 Gew.-% vorzugsweise von 0,5 bis 2 Gew.-% enthalten sein.

Gegebenenfalls können sie in Mischung mit strahlenhärtbaren Verbindungen, wie zum Beispiel Acrylaten und Methacrylaten als Additive in strahlenhärtenden Beschichtungen, Druckfarben und/oder Drucklacken mitverwendet werden.

### Allgemeine Herstellvorschrift:

Im Folgenden wird die Herstellung eines erfindungsgemäßen neuartigen Polyestersiloxanacrylats beschrieben.

In einem trockenen Dreihalskolben, der mit einem Rührer, Intensivkühler, Thermometer und Tropftrichter ausgerüstet ist, werden das Polyisocyanat, ein geeignetes inertes Lösemittel und eines wirksame Menge des Inhibitors vorgelegt. Unter Rühren wird die Mischung auf 80 bis 100 °C erwärmt und eine wirksame Menge eines Katalysators zugegeben.

Anschließend wird das organisch modifizierte Polysiloxan langsam zugetropft. Es kommt zu einer leicht exothermen Reaktion. Nachdem der Isocyanatgehalt auf den zu erwartenden Wert abgesunken ist, wird eine auf den Restisocyanatgehalt bezogene, im wesentlichen equivalente Menge (0,8 bis 1,2) eines Polyesteracrylats zugegeben. Die Reaktionsmischung wird unter Rückfluss erhitzt, bis ein kompletter Isocyanatumsatz erreicht ist. Gegebenenfalls kann der verbliebene Restisocyanatgehalt mit weiteren niedermolekularen, mit Isocyanatgruppen reaktiven Verbindungen reduziert werden.

### Ausführungsbeispiele:

Die Erfindung wird nachfolgend anhand von Ausführungsbeispielen näher erläutert. Analog der vorgenannten allgemeinen Herstellvorschrift werden die folgenden erfindungsgemäßen Verbindungen 1 bis 5 hergestellt (Tabelle 1):

**Tabelle 1:**

| **Verbindung** | **Polyisocyanat** | **Polysiloxan** | **Polyesteracrylat ca.1 Equiv. auf Rest NCO-Gehalt** |
|---|---|---|---|
| 1 | 2 Mol Desmodur^{®} N 3300 (Bayer AG; Oligoisocyanat) | 1 Mol Tegomer^{®} H-Si 2111 (Goldschmidt AG; α,ω-hydroxyfunktionelles Polysiloxan, M ca. 1000) | Placcel® FA 6 (Daicel Chemical Industries) |
| 2 | 2 Mol Vestanat^{®} T1890/100 (Degussa AG; Oligoisocyanat) | 1 Mol Tegomer^{®} H-Si 2311 (Goldschmidt AG; α,ω-hydroxyfunktionelles Polysiloxan, M ca. 3000) | Placcel^{®} FM 5 (Daicel Chemical Industries) |
| 3 | 2 Mol Vestanat T1890/100 (Degussa AG; Oligoisocyanat) | 1 Mol Tegomer^{®} A-Si 2322 (Goldschmidt AG; (α,ω)-amino- funktionelles Polysiloxan, M ca. 3000) | Placcel^{®} FA 6 (Daicel Chemical Industries) |
| 4 | 1,8 Mol Vestanat^{®} T1890/100 (Degussa AG; Oligoisocyanat) | 1 Mol Tegopren^{®} 5845 (Goldschmidt AG; α,ω-polyetherfunktionelles Polysiloxan, M ca. 3000) | Placcel^{®} FA 2 (Daicel Chemical Industries) |
| 5 | 1,8 Mol Vestanat^{®} T1890/100 (Degussa AG; Oligoisocyanat) | 1 Mol Tegomer^{®} H-Si 2311 (Goldschmidt AG; (α,ω-hydroxyfunktionelles Polysiloxan, M ca. 3000) | Placcel^{®} FA 6 (Daicel Chemical Industries) |

Es ist dem Fachmann geläufig, dass die oben genannten Verbindungen als Stoffgemische vorliegen. Die mittleren Molekulargewichte der genannten Verbindungen wurden aus den Isocyanatwerten und den Hydroxyl- bzw. Aminzahlen berechnet.

Zum Vergleich wurden folgende nicht erfindungsgemäßen Verbindungen ausgewählt:

### Vergleich 1:

Ein handelsübliches Siloxanacrylat, das unter dem Handelsnamen Tego® Rad 2700 von der Tego Chemie Service GmbH erhältlich ist.

### Vergleich 2:

Ein handelsübliches Polyestersiloxan, das unter dem Handelsnamen Tego® Glide 422 von der Tego Chemie Service GmbH erhältlich ist.

### Vergleich 3:

Ein handelsübliches Polyethersiloxan, das unter dem Handelsnamen Tego® Glide 440 von der Tego Chemie Service GmbH erhältlich ist.

### Prüfrezeptur:

Als UV-härtbarer Prüflack wurde folgende Rezeptur ausgewählt (Tabelle 2):

**Tabelle 2:**

| **Rohstoff** | **%** |
|---|---|
| Ebecryl^{®} 608 (UCB Chemicals; Epoxyacrylat) | 44,5 |
| Laromer^{®} TPGDA (BASF AG; Tripropylenglykol-diacrylat) | 45,5 |
| Benzophenon | 5 |
| Ebecryl^{®} P 115 (UCB Chemicals; Aminofunktionelles Acrylat) | 5 |

Der UV-härtbare Prüflack wird auf übliche Weise gemäß der vorstehenden Rezeptur formuliert. Als letzter Rezepturbestandteil wird jeweils 0,5 % (Wirkstoffgehalt) des Siliconadditivs hinzugegeben.

Zur Bestimmung der anwendungstechnischen Eigenschaften der gehärteten Beschichtungen werden die Formulierungen mittels eines Spiralrakels 50 µm nass auf zuvor mit Isopropanol gereinigte PVC-Bodenbelag-Prüfstücke aufgerakelt. Die Härtung erfolgt durch Einwirkung von UV-Licht mit 120 W/cm mit einer Bahngeschwindigkeit von 10 m/min. Dieser Vorgang wird jeweils zweimal wiederholt.

Zur Bewertung der sog. "marker resistance" werden mit verschiedenen handelsüblichen Filzschreibern (Prüfstifte, z.B. Edding® 3000) Schriftzüge simuliert. Bewertet wird das optische Erscheinungsbild des sich ergebenden Prüfstrichs. Bei sehr guter marker resistance wird sich der Prüfstrich auf der Lackoberfläche zusammenziehen und somit nur kleinere Flächen bedecken, die einfach, ggf. unter Zuhilfenahme von Löse- oder Putzmitteln, entfernt werden können. Die Beurteilung erfolgt auf einer Skala von 1 bis 4, wobei 1 einen Film mit hervorragender "marker resistance" beschreibt, 4 von schlechter "marker resistance" zeugt.

Anschließend werden der Verlauf, Kraterneigung und Trübung des Lackes optisch beurteilt. Die Beurteilung erfolgt auf einer Skala von 1 bis 4, wobei 1 einen störungsfreien Film beschreibt, 4 von starken Filmstörungen (Krater, Dellen, Trübungen, Orangenhaut etc.) zeugt.

Der Gleitwert der gehärteten Beschichtung wird mit Hilfe eines speziell umgebauten elektromotorischen Filmaufziehgerätes mit konstantem Vorschub bestimmt. Auf der beweglichen Rakelhalterung ist anstelle des eingelegten Filmziehrakels eine Platte montiert, die am anderen Ende des Gerätes auf Rollen liegt. Mit Hilfe der Rakelhalterung kann die Platte, auf der das beschichtete Substrat befestigt ist, bewegt werden. Um den Gleitwert zu bestimmen, wird ein Gewicht (200 g) mit flächiger Filzunterlage auf die beschichtete Folie gesetzt. Die auf der Platte befindliche beschichtete Folie wird mit einer Geschwindigkeit von 11 mm/s unter dem Gewicht weggezogen. Die hierfür notwendige, vertikale Kraft wird mit Hilfe eines Kraftaufnehmers gemessen und als Gleitwert bezeichnet.

**Tabelle 3:**

| | **marker resistance** | **Verlauf** | **Trübung** | **Gleitwert (cN)** |
|---|---|---|---|---|
| Kein Additiv | 5 | 1 | Klar | 443 |
| Verbindung 1 | 2-3 | 2 | Klar | 317 |
| Verbindung 2 | 1-2 | 2 | Klar | 221 |
| Verbindung 3 | 1-2 | 1 | Klar | 234 |
| Verbindung 4 | 2-3 | 1 | Klar | 256 |
| Verbindung 5 | 1 | 1 | Klar | 238 |
| | | | | |
| Vergleich 1 | 1-2 | 5 | Stark trüb | 71 |
| Vergleich 2 | 4 | 2 | Leicht trüb | 125 |
| Vergleich 3 | 4-5 | 2 | klar | 65 |

Wie aus der vorhergehenden Tabelle 3 ersichtlich ist, zeichnen sich die erfindungsgemäßen Polyestersiloxanacrylate durch ein Optimum an "marker resistance" aus, wobei die weiteren anwendungstechnischen Eigenschaften (Verlauf, Trübung, Gleitwert) auf einem unerwartet hohen Niveau verbleiben.

Gegenüber den nicht-erfindungsgemäßen Siloxanverbindungen verbleiben insbesondere die Gleitwerte der erfindungsgemäßen Polyestersiloxanacrylate auf einem akzeptablen hohen Niveau (> 200 cN).

## Patentansprüche

1. Polyestersiloxanacrylate, erhältlich durch die Umsetzung von
I.) einem oder mehreren organisch modifizierten Polysiloxanen der allgemeinen Formel (I) 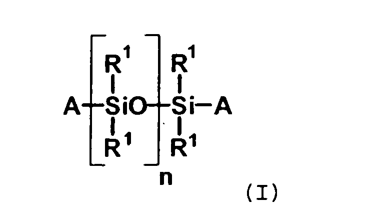 wobei die Reste
R¹ im Molekül gleich oder verschieden sind und Alkylreste mit 1 bis 4 Kohlenstoffatomen bedeuten,
A gleich oder verschieden sind und -R²-X bedeuten, wobei
R² ein Rest der allgemeinen Formel (Ia) 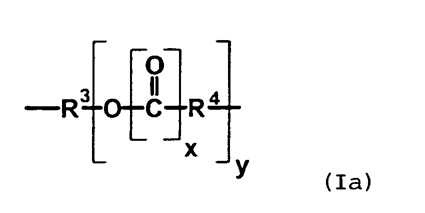 ist,
R³ ein zweiwertiger, gegebenenfalls substituierter Alkyl- oder Alkenylrest mit 2 bis 11 Kohlenstoffatomen ist,
R⁴ untereinander gleich oder verschieden sind und zweiwertige, gegebenenfalls substituierte Alkyl- oder Aralkylreste sind,
x unabhängig voneinander einen Wert von 0 oder 1,
y unabhängig voneinander einen Wert von 0 bis 100 hat und
X eine mit Isocyanaten reaktive Gruppe ist und
II.) einem oder mehreren Polyisocyanaten mit jeweils wenigstens zwei Isocyanatgruppen und
III.) einem oder mehreren Polyesteracrylaten oder Polyestermethacrylaten der allgemeinen Formel (II) 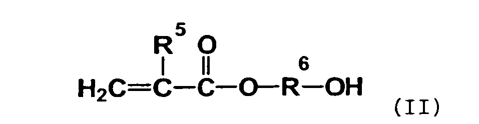 worin
R⁵ ein Wasserstoffatom oder eine Methylgruppe bedeutet und
R⁶ ein Rest der allgemeinen Formel (IIa) 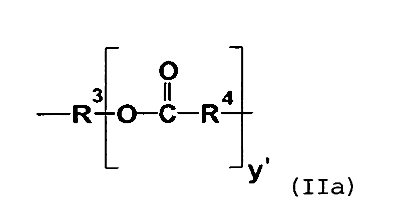 ist, wobei
R³ und R⁴ die oben angegebene Bedeutung haben
y' einen Wert von 1 bis 50 hat,
gegebenenfalls in Gegenwart von Inhibitoren, Katalysatoren und gegebenenfalls weiteren mit Isocyanaten reaktiven Gruppen aufweisenden Verbindungen.

2. Polyestersiloxanacrylate gemäß Anspruch 1, erhältich durch Umsetzung von einem oder mehreren organisch modifizierten Polysiloxanen der allgemeinen Formel (I) mit einem oder mehreren Polyisocyanaten mit jeweils wenigstens zwei Isocyanatgruppen im Molverhältnis von 1: 1,60 bis 1: 1,95 und im wesentlichen äquivalenten Mengen (bezogen auf OH-Gruppen der Verbindungen der allgemeinen Formel (II) und Isocyanatgruppen des Prepolymeren aus Verbindungen der allgemeinen Formel (I) und Isocyanaten) von einem oder mehreren Polyesteracrylaten oder Polyestermethacrylaten der allgemeinen Formel (II) gegebenenfalls in Gegenwart von Inhibitoren, Katalysatoren und gegebenenfalls weiteren mit vorzugsweise monofunktionellen mit Isocyanaten reaktiven Gruppen aufweisenden Verbindungen.

3. Polyestersiloxanacrylate gemäß den Ansprüchen 1 bis 2, **dadurch gekennzeichnet, dass** in Verbindungen der allgemeinen Formel (I) R³ unabhängig voneinander ausgewählt ist aus der Gruppe -CH₂CH₂-, -CH₂CH (CH₃) -, -CH₂CH₂CH₂-, - (CH₂)₆- , - (CH₂)₈-, -CH₂CH₂CH(CH₃)- und R⁴ unabhängig voneinander ausgewählt ist aus der Gruppe -CH₂CH₂-, -CH₂CH (CH₃) -, -CH₂CH₂CH₂-, -(CH₂)₅-, -(CH₂)₆- -(CH₂)₈ -CH₂CH₂CH (CH₃)-, -CH₂CH (CH₂CH₃) -,

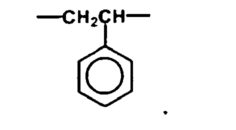

4. Polyestersiloxanacrylate gemäß den Ansprüchen 1 bis 3, **dadurch gekennzeichnet, dass** in Verbindungen der allgemeinen Formel (I)
n einen Wert von 5 bis 100,
x einen Wert von 0 oder 1,
y einen Wert von 0 bis 20, hat.

5. Polyestersiloxanacrylate gemäß den Ansprüchen 1 bis 4, **dadurch gekennzeichnet, dass** in Verbindungen der allgemeinen Formel (IIa) y' einen Wert von 1 bis 20, hat.

6. Polyestersiloxanacrylate gemäß den Ansprüchen 1 bis 4, **dadurch gekennzeichnet, dass** als Polyisocyanate Toluylendiisocyanat (TDI), Hexamethylendiisocyanat (HMDI), Isophorondiisocyanat (IPDI), Diphenylmethandiisocyanat (MDI), Tetramethylxyloldiisocyanat (TMXDI) und deren Oligomere mitverwendet werden.

7. Verfahren zur Herstellung der Polyestersiloxanacrylate gemäß Anspruch 1, **dadurch gekennzeichnet, dass** in erster Stufe (S₁)
a) ein oder mehrere organisch modifizierte Polysiloxane der allgemeinen Formel (I) 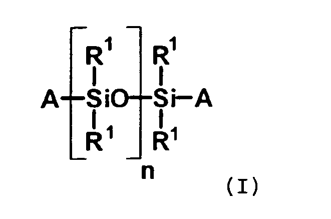 worin die Reste
A und R¹ die oben angegebene Bedeutung haben, mit
b) einem oder mehreren Polyisocyanaten mit jeweils wenigstens zwei Isocyanatgruppen, gegebenenfalls in Gegenwart von Inhibitoren und Katalysatoren zu einem Isocyanatgruppen enthaltenden Prepolymer umgesetzt werden und anschließend in zweiter Stufe (S₂) mit einem oder mehreren Polyesteracrylaten oder Polyestermethacrylaten der allgemeinen Formel (II) 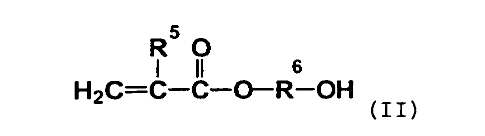
worin die Reste R⁵ und R⁶ die oben angegebene Bedeutung haben und gegebenenfalls in einer weiteren Stufe mit vorzugsweise monofunktionellen mit Isocyanaten reaktiven Gruppen aufweisenden Verbindungen nach an sich bekannten Verfahren umgesetzt werden.

8. Verwendung von ein oder mehreren Verbindungen gemäß Anspruch 1 als Additive in strahlenhärtenden Beschichtungen.

9. Strahlenhärtende Beschichtung, Druckfarbe und/oder Drucklack enthaltend als Additive 0,01 bis 10 Gew.-%, bezogen auf die strahlenhärtende Beschichtung, ein oder mehrere Verbindungen gemäß Anspruch 1.

## Claims

1. Polyestersiloxane acrylates obtainable by reacting
I.) one or more organically modified polysiloxanes of the general formula (I) 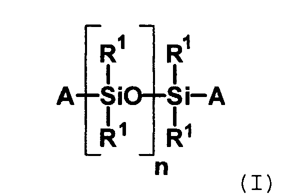 where the radicals
R¹ in the molecule are identical or different and are alkyl radicals having 1 to 4 carbon atoms,
A are identical or different and are -R²-X, where
R² is a radical of the general formula (Ia) 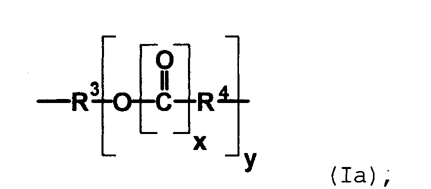
R³ is a divalent, optionally substituted alkyl or alkenyl radical having 2 to 11 carbon atoms,
R⁴ radicals are identical to or different from one another and are divalent, optionally substituted alkyl or aralkyl radicals,
x independently at each occurrence is 0 or 1,
y independently at each occurrence has a value from 0 to 100, and
X is an isocyanate-reactive group, and
II.) one or more polyisocyanates having in each case at least two isocyanate groups, and
III.) one or more polyester acrylates or polyester methacrylates of the general formula (II) 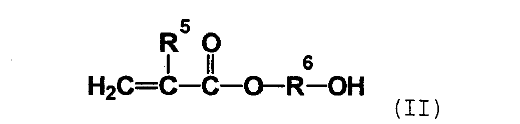
in which
R⁵ is a hydrogen atom or a methyl group and
R⁶ is a radical of the general formula (IIa) 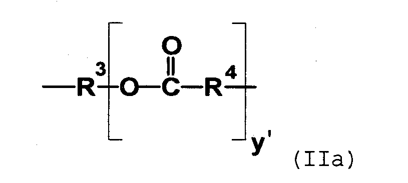 where
R³ and R⁴ are as defined above and
y' has a value from 1 to 50,
optionally in the presence of inhibitors, catalysts, and optionally further compounds containing isocyanate-reactive groups.

2. Polyestersiloxane acrylates according to Claim 1, obtainable by reacting one or more organically modified polysiloxanes of the general formula (I) with one or more polyisocyanates having in each case at least two isocyanate groups in a molar ratio of from 1:1.60 to 1:1.95, and essentially equivalent amounts (based on OH groups of the compounds of the general formula (II) and isocyanate groups of the prepolymer formed from compounds of the general formula (I) and isocyanates) of one or more polyester acrylates or polyester methacrylates of the general formula (II) optionally in the presence of inhibitors, catalysts, and optionally further, preferably monofunctional, compounds containing isocyanate-reactive groups.

3. Polyestersiloxane acrylates according to Claim 1 or 2, **characterized in that** in compounds of the general formula (I) R³ independently at each occurrence is selected from the group consisting of -CH₂CH₂-, -CH₂CH(CH₃)-, -CH₂CH₂CH₂-, -(CH₂)₆-,-(CH₂)₈-, and -CH₂CH₂CH(CH₃)- and R⁴ independently at each occurrence is selected from the group consisting of -CH₂CH₂-, -CH₂CH(CH₃) -, -CH₂CH₂CH₂-, - (CH₂)₅-, - (CH₂)₆-, - (CH₂)₈-, -CH₂CH₂CH(CH₃)-, -CH₂CH (CH₂CH₃) -, and

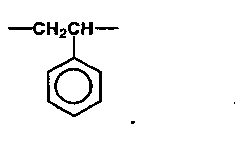

4. Polyestersiloxane acrylates according to any of Claims 1 to 3, **characterized in that** in compounds of the general formula (I)
n is from 5 to 100,
x is 0 or 1, and
y is from 0 to 20.

5. Polyestersiloxane acrylates according to any of Claims 1 to 4, **characterized in that** in compounds of the general formula (IIa) y' is from 1 to 20.

6. Polyestersiloxane acrylates according to any of Claims 1 to 4, **characterized in that** as polyisocyanates tolylene diisocyanate (TDI), hexamethylene diisocyanate (HMDI), isophorone diisocyanate (IPDI), diphenylmethane diisocyanate (MDI), tetramethylxylene diisocyanate (TMXDI) and oligomers thereof are used.

7. Process for preparing the polyestersiloxane acrylates according to Claim 1, **characterized in that**, in a first stage (S₁)
a) one or more organically modified polysiloxanes of the general formula (I) 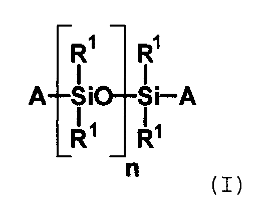 in which the radicals
A and R¹ are as defined above is/are reacted with
b) one or more polyisocyanates having in each case at least two isocyanate groups, optionally in the presence of inhibitors and catalysts, to form a prepolymer containing isocyanate groups, and subsequently in a second stage (S₂) said prepolymer is reacted with one or more polyester acrylates or polyester methacrylates of the general formula (II) 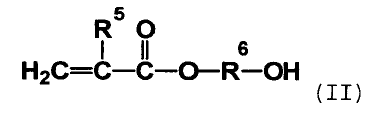
in which the radicals R⁵ and R⁶ are as defined above and optionally in a further stage with preferably monofunctional compounds containing isocyanate-reactive groups by processes which are known per se.

8. Use of one or more compounds according to Claim 1 as additives in radiation-curing coatings.

9. Radiation-curing coating, printing ink and/or print varnish comprising as additives from 0.01 to 10% by weight, based on the radiation-curing coating, ink or varnish, of one or more compounds according to Claim 1.

## Revendications

1. Polyestersiloxane-acrylates, pouvant être obtenus par la transformation
I.) d'un ou de plusieurs polysiloxanes organomodifiés de formule générale (I) 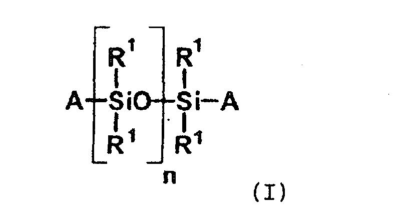 dans laquelle les radicaux
R¹ sont identiques ou différents dans la molécule et signifient des radicaux alkyle comprenant 1 à 4 atomes de carbone,
A sont identiques ou différents et représentent -R²-X, où
R² représente un radical de formule générale (Ia) 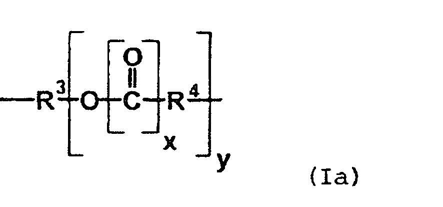
R³ représente un radical alkyle ou alcényle divalent, le cas échéant substitué, comprenant 2 à 11 atomes de carbone,
R⁴ sont identiques ou différents les uns des autres et représentent des radicaux alkyle ou aralkyle divalents, le cas échéant substitués,
x vaut, indépendamment l'un de l'autre, 0 ou 1,
y vaut, indépendamment l'un de l'autre, 0 à 100 et
X représente un groupement réactif avec des isocyanates et
II.) d'un ou de plusieurs polyisocyanates présentant à chaque fois au moins deux groupements isocyanate et
III.) d'un ou de plusieurs polyesteracrylates ou polyesterméthacrylates de formule générale (II) 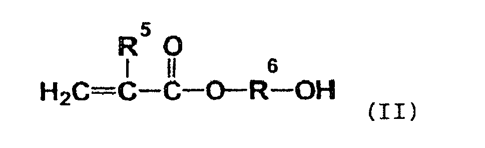 où
R⁵ signifie un atome d'hydrogène ou un groupement méthyle et
R⁶ représente un radical de formule générale (IIa) 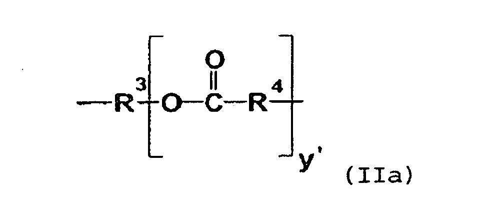 dans laquelle
R³ et R⁴ ont la signification susmentionnée et
y' a une valeur de 1 à 50,
le cas échéant en présence d'inhibiteurs, de catalyseurs et le cas échéant d'autres composés présentant des groupements réactifs avec des isocyanates.

2. Polyestersiloxane-acrylates selon la revendication 1, pouvant être obtenus par la transformation d'un ou de plusieurs polysiloxanes organomodifiés de formule générale (I) avec un ou plusieurs polyisocyanates présentant à chaque fois au moins deux groupements isocyanate dans un rapport molaire de 1:1,60 à 1:1,95 et des quantités essentiellement équivalentes (par rapport aux groupements OH des composés de formule générale (II) et aux groupements isocyanate du prépolymère des composés de formule générale (I) et des isocyanates) d'un ou de plusieurs polyesteracrylates ou polyesterméthacrylates de formule générale (II) le cas échéant en présence d'inhibiteurs, de catalyseurs et le cas échéant d'autres composés présentant des groupements de préférence monofonctionnels réactifs avec des isocyanates.

3. Polyestersiloxane-acrylates selon les revendications 1 à 2, **caractérisés en ce que**, dans les composés de formule générale (I), R³ est choisi, indépendamment l'un de l'autre, du groupe formé par -CH₂CH₂-, -CH₂CH (CH₃) -, -CH₂CH₂CH₂-, - (CH₂)₆- - (CH₂)₈- , -CH₂CH₂CH(CH₃)- et R⁴ est choisi, indépendamment l'un de l'autre, du groupe formé par -CH₂CH₂-, CH₂CH(CH₃)-, -CH₂CH₂CH₂-, - (CH₂)₅-, -(CH₂)₆-, - (CH₂)₈ -, -CH₂CH₂CH(CH₃)-, -CH₂CH(CH₂CH₃) -,

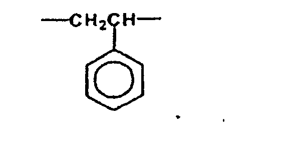

4. Polyestersiloxane-acrylates selon les revendications 1 à 3, **caractérisés en ce que** dans les composés de formule générale (I)
n vaut 5 à 100,
x vaut 0 ou 1,
y vaut 0 à 20.

5. Polyestersiloxane-acrylates selon les revendications 1 à 4, **caractérisés en ce que** dans les composés de formule générale (IIa) y' vaut 1 à 20.

6. Polyestersiloxane-acrylates selon les revendications 1 à 4, **caractérisés en ce qu'**on utilise conjointement comme polyisocyanates le toluylènediisocyanate (TDI), l'hexaméthylènediisocyanate (HMDI), l'isophoronediisocyanate (IPDI), le diphénylméthanediisocyanate (MDI), le tétraméthylxylènediisocyanate (TMXDI) et leurs oligomères.

7. Procédé pour la préparation des polyestersiloxane-acrylates selon la revendication 1, **caractérisé en ce que** dans la première étape (S₁)
a) on transforme un ou plusieurs polysiloxanes organomodifiés de formule générale (I) 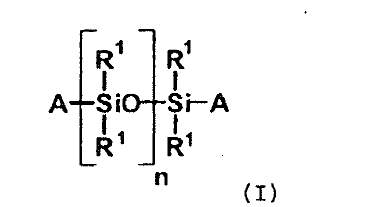 dans laquelle les radicaux
A et R¹ ont la signification susmentionnée avec
b) un ou plusieurs polyisocyanates présentant à chaque fois au moins deux groupements isocyanate, le cas échéant en présence d'inhibiteurs et de catalyseurs en un prépolymère contenant des groupements isocyanate et on le transforme ensuite dans une deuxième étape (S₂) avec un ou plusieurs polyesteracrylates ou polyesterméthacrylates de formule générale (II) 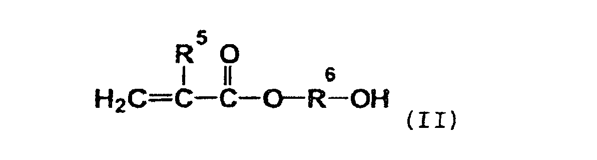
dans laquelle les radicaux R⁵ et R⁶ ont la signification susmentionnée et, le cas échéant, dans une autre étape avec des composés présentant des groupements de préférence monofonctionnels réactifs avec des isocyanates selon des procédés connus en soi.

8. Utilisation d'un ou de plusieurs composés selon la revendication 1 comme additifs dans les revêtements durcissant sous l'effet d'un rayonnement.

9. Revêtement, encre d'imprimerie et/ou laque d'imprimerie durcissant sous l'effet d'un rayonnement, contenant comme additifs 0,01 à 10% en poids, par rapport au revêtement, encre d'imprimerie et/ou laque d'imprimerie durcissant sous l'effet d'un rayonnement, d'un ou de plusieurs composés selon la revendication 1.
